Europäisches Patentamt

European Patent Office

Office européen des brevets

(19)

(11) Veröffentlichungsnummer: **0 061 522**
**A1**

(12) # EUROPÄISCHE PATENTANMELDUNG

(21) Anmeldenummer: **81108669.3**

(22) Anmeldetag: **22.10.81**

(51) Int. Cl.³: **B 65 D 35/08**

(30) Priorität: **21.03.81 EP 81102137**

(43) Veröffentlichungstag der Anmeldung:
**06.10.82 Patentblatt 82/40**

(84) Benannte Vertragsstaaten:
**AT BE CH DE FR GB IT LI LU NL SE**

(71) Anmelder: **STAHLGRUBER Otto Gruber GmbH & Co.**
**Einsteinstrasse 130**
**D-8000 München 80(DE)**

(72) Erfinder: **Gottauf, Georg**
**Elektrastrasse 56**
**D-8000 München 80(DE)**

(74) Vertreter: **Huss, Carl-Hans, Dipl.-Ing. et al,**
**Rathausstrasse 14**
**D-8100 Garmisch-Partenkirchen(DE)**

(54) **Tube aus Kunststoff.**

(57) Zur genaueren und portionsweisen Dosierung des Inhalts weist eine Tube aus Kunststoff einen membranenartigen Bereich (5) auf, der z.B. durch eine ihn eingrenzende, umlaufende Rinne, Rille, Kerbe, Sicke oder dgl. (6) gebildet ist, oder eine geringere Wanddicke als der übrige Tubenkörper (3) aufweist. Die Entleerung kann durch einen ovalen Querschnitt der Tube weiter erleichtert werden.

*FIG. 1*

EP 0 061 522 A1

G 547 EU-a-He

Garmisch-Partenkirchen,
16. Oktober 1981
He/Sh

Firma Stahlgruber
Otto Gruber GmbH & Co.
Einsteinstrasse 130
D-8000 München 80

Tube aus Kunststoff

Tuben aus Kunststoff sind bekannt und bürgern sich infolge mancher hier nicht zu erörternder Vorteile immer mehr ein. Gegenüber den vorbekannten, aus weichem Metallfolienmaterial bestehenden haben sie aber den Nachteil, dass sie sich nicht vom Ende her bleibend verformbar zusammenquetschen und aufrollen lassen, sondern nach dem für die dosierte Entleerung erforderlichen Druck auf den Tubenkörper in die Ursprungsform "zurückspringen". Aus diesem Grunde können, wie allgemein bekannt, Kunststofftuben verhältnismässig schwierig entleert werden, und das wird insbesondere dann als großer Nach-

- 2 -

teil angesehen, wenn es auf eine portionsweise, dosierte Entleerung ankommt, wie das beispielsweise für die Reparatur von Schadensstellen an Gummigegenständen mittels vorfabrizierter Flicken der Fall ist, bei welcher Reparatur die Schadensstelle mit einer bestimmten Menge Vulkanisierflüssigkeit eingestrichen werden muss.

Der Erfindung liegt daher die Aufgabe zugrunde, eine Tube aus Kunststoff zu schaffen, welche die genau dosierte portionsweise Entleerung ermöglicht.

Diese Aufgabe löst die Erfindung dadurch, dass der Tubenkörper einen membranartigen Bereich aufweist, der z.B. durch eine umlaufende Rinne, Rille, Kerbe, Sicke oder dgl. begrenzt wird und bzw. oder eine geringere Wanddicke als der übrige Tubenkörper aufweist.

Vorzugsweise weist die Tube einschliesslich des sich vom Mundstück aus erweiternden Übergangsteiles einen ovalen Querschnitt auf.

Die Erfindung ist an einem Ausführungsbeispiel in der Zeichnung veranschaulicht und anhand dieser nachfolgend beschrieben. Es stellen dar:

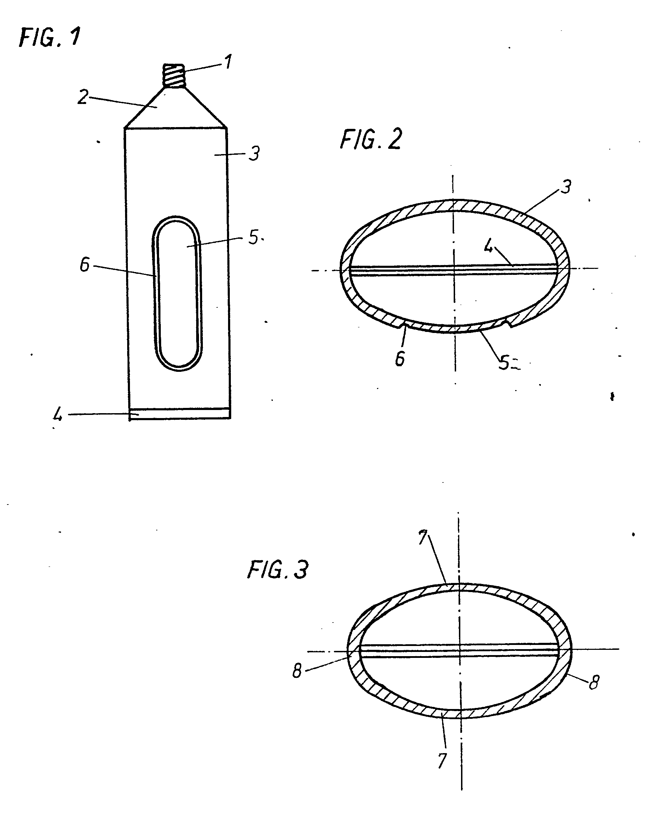

Fig. 1 eine Aufsicht auf eine Tube nach der Erfindung in gering vergrössertem Maßstab,

Fig. 2 einen Querschnitt durch eine Tube

- 3 -

nach Fig. 1 in weiter vergrössertem
Maßstab,

Fig. 3  einen Querschnitt durch eine abgewandelte Ausführungsform.

. Die Tube kann in üblicher Weise einstückig
aus Kunststoff gespritzt sein und besteht dann aus
dem ein Aussengewinde für die Verschlußkappe aufweisenden zylindrischen Verschlußteil 1, dem sich
erweiternden Übergangsteil 2 und dem schlauchförmigen Tubenkörper 3, dessen offenes Ende nach der
Füllung bei 4 z.B. durch Verschweißen verschlossen
wird.

Erfindungsgemäss weist der Tubenkörper 3
einen membranenartigen Bereich 5 auf, der bei dem
dargestellten Ausführungsbeispiel durch eine seine
Gestalt und Größe bestimmende Rinne, Rille, Kerbe,
Sicke oder dgl. 6 gebildet wird. Er kann ausserdem, wie Fig. 2 veranschaulicht, eine geringere
Wanddicke aufweisen als der übrige Teil des
Tubenkörpers 3 und kann auch ohne Rinnen, Rillen,
Sicken oder dgl. 6 nur durch seine gegenüber dem
übrigen Tubenkörper 3 verringerte Wanddicke entstehen.

Der membranenförmige Bereich 5, der entsprechend durch Aufdruck oder dgl. markiert sein
kann, ist für die Auflage des drückenden Fingergliedes, also regelmässig des vorderen Daumengliedes, bestimmt. Wenn dann die Tube in Benutzung
genommen, also zwischen Daumen und Zeigefinger genommen wird und der Daumen auf dem Bereich 5 liegt, wird für die Abgabe eines Teils der Tubenfüllung
ein Druck ausgeübt, und da durch die Kerben oder
dgl. 6 oder die Wanddickenverdünnung der Bereich
5 gegenüber dem übrigen Tubenkörper 3 eine Eigenbeweglichkeit erhält, wird der grössere Teil dieses
Druckes nicht auf den ganzen Tubenkörper verteilt, sondern in diesem Bereich eingeleitet. Bei
Druck wird also in erster Linie der Bereich 5 wie
eine Membrane eingedrückt und dadurch eine sehr
viel bessere Dosierung bei der Entleerung des
Tubeninhaltes als bei der Handhabung vorbekannter
Kunststofftuben erzielt.

Das in der Zeichnung dargestellte Ausführungsbeispiel besitzt ferner durchgehend, also
einschliesslich des Übergangsteils 2, einen ovalen
Querschnitt. Diese Gestaltung verbessert nicht nur
die Verpackungsfähigkeit, sondern vor allem auch
die Dosierung, weil sich ein ovaler Querschnitt an
sich schon leichter verformen lässt, als der als
besonders biegesteif bekannte runde, und weil
ausserdem der Preßweg bis zum Aufeinandertreffen
gegenüberliegender Wandbereiche längs der kleinen
Achse des Ovals geringer ist. Dies gilt insbesondere
hinsichtlich der völligen Entleerung der Tube, also
im Bereich des Übergangsteils 2, der bei rundem
Querschnitt sehr schwer verformbar ist.

In Fig. 3 ist eine besonders vorteilhafte
Ausführungsform einer solchen Tube mit ovalem
Querschnitt dargestellt, wobei die geringe Wanddicke durchgehend in den Wandbereichen mit grösse-

- 5 -

rem Krümmungsradius längs der kleineren Achse des
Ovals vorgesehen ist, während die stärker gekrümmten Bereiche längs der grösseren Achse des Ovals
eine grössere Wandstärke aufweisen. Diese Ausführungsform ist nicht nur handhabungsmäßig, sondern
auch herstellungsmäßig besonders günstig, weil einfache Formen ohne die zur Erzeugung örtlicher Wandstärkenverringerungen erforderlichen seitlichen
Schieber verwendet werden können.

- 1 -

<u>P a t e n t a n s p r ü c h e</u>

1.	Tube aus Kunststoff, bestehend aus einem Verschlußstück, einem kegelstumpfförmigen Übergangsstück und einem nach der Füllung verschlossenen schlauchförmigen Tubenkörper, dadurch g e - k e n n z e i c h n e t , dass der Tubenkörper (3) einen membranenartigen Bereich (5) aufweist.

2.	Tube nach dem Anspruch 1, dadurch g e - k e n n z e i c h n e t , dass der membranenartige Bereich (5) durch eine ihn eingrenzende umlaufende Rinne, Rille, Kerbe, Sicke oder dgl. (6) gebildet ist.

3.	Tube nach dem Anspruch 1, dadurch g e - k e n n z e i c h n e t , dass der membranenartige Bereich (5) durch eine geringere Wanddicke als der übrige Tubenkörper (3) gebildet ist.

4.	Tube nach den Ansprüchen 1 bis 3, dadurch g e k e n n z e i c h n e t , dass sie einschliesslich des sich erweiternden Übergangsteils (2) einen ovalen Querschnitt aufweist.

5.	Tube nach den Ansprüchen 3 und 4, dadurch g e k e n n z e i c h n e t , dass der membranenartige Bereich geringerer Wanddicke (7) durch die einander gegenüberliegenden Teile des ovalen Querschnitts mit grösserem Krümmungsradius längs der kleineren Achse gebildet wird, während die

- 2 -

stärker gekrümmten Bereiche (8) mit kleinerem
Krümmungsradius längs der grösseren Achse eine
grössere sie versteifende Wandstärke aufweisen.

FIG. 1

1

2

3

5

6

4

FIG. 2

3

4

6

5

FIG. 3

7

8

8

7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE – A1 – 2 639 952</u> (TATENHORST) <br> * Anspruch 9; Fig. 3 * <br> –– | 1,3, 5 |
| A | <u>US – A – 3 648 895</u> (STRAZDINS) <br> * Fig. 10 bis 16 * <br> –– | 1–3 |
| A | <u>GB – A – 990 473</u> (MERCK & CO.) <br> * Fig. 1 bis 5 * <br> –– | 1–3 |
| A | <u>US – A – 2 682 355</u> (ROBBINS) <br> * Fig. 1, 3, 4 * <br> –– | 1,3 |
| A | <u>FR – A – 1 502 189</u> (REXALL DRUG AND CHEMICAL CO.) <br> * Ansprüche 1, 2; Fig. 1 bis 12 * <br> –– | 1,4 |
| A | <u>US – A – 2 605 018</u> (CROCE et al.) <br> * Fig. 4 * <br> –– | 1,5 |
| A | <u>US – A – 2 430 046</u> (DREYFUS) <br> * Spalte 1, Zeilen 9 bis 22; Spalte 3, Zeilen 24 bis 47; Fig. 5 * <br> –– | 1,5 |
| A | <u>US – A – 4 020 978</u> (SZCZEPANSKI) <br> –– | |
| A | <u>FR – A7 – 2 288 445</u> (GOIFFON) <br> –– | |
| A | <u>FR – A – 1 535 749</u> (POMEON) <br> –– | |
| A | <u>DE – C – 672 535</u> (STAPPERT) <br> –––– | |

**KLASSIFIKATION DER ANMELDUNG (Int. Cl.³)**

B 65 D 35/08

**RECHERCHIERTE SACHGEBIETE (Int. Cl.³)**

B 65 D 35/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 24-06-1982 | SCHLABBACH |

EPA form 1503.1   06.78